# EUROPÄISCHE PATENTSCHRIFT

(11) **EP 2 565 498 B1**
(45) Veröffentlichungstag und Bekanntmachung des Hinweises auf die Patenterteilung: **05.03.2014**
(21) Anmeldenummer: 11179363.4
(22) Anmeldetag: 30.08.2011
(51) Int. Cl.: F16H 57/04, F16H 57/033

(54) **Getriebebaureihe**
Transmission line
Série de transmission

(43) Veröffentlichungstag der Anmeldung: 06.03.2013
(73) Patentinhaber: Siemens Aktiengesellschaft, 80333 München (DE)
(72) Erfinder: Steubler, Thomas, 09385 Lugau /Erzgeb. (DE)

(56) Entgegenhaltungen:
- WO-A1-2008/089829
- WO-A1-2008/089830

## Beschreibung

Aus der DE 10 2007 004 964 A1 ist eine Getriebebaureihe mit einer außerhalb eines Getriebegehäuses angeordneten Schmierölpumpe bekannt, die 2 Druckanschlüsse und einen Sauganschluß umfaßt. Die beiden Druckanschlüsse sind an gegenüberliegenden Stirnseiten der Schmierölpumpe angeordnet und ermöglichen je nach Anbauvariante der Schmierölpumpe eine Anbindung einer der beiden Druckleitungen an ein getriebeinternes Rohrleitungssystem bzw. an eine externe Verrohrung

In der gattungsbildenden DE 10 2007 004 965 A1 ist eine Getriebebaureihe beschrieben, bei der eine Schmierölpumpe entsprechend einer ersten Variante an einem Lagerdeckel außerhalb eines Getriebegehäuses montiert ist. Dabei ist die Schmierölpumpe über den Lagerdeckel an eine Ölkreislaufverrohrung innerhalb des Getriebegehäuses angeschlossen. Entsprechend einer zweiten Variante ist eine zur ersten Variante baugleiche Schmierölpumpe vorgesehen, die an einem Deckel des Getriebegehäuses montiert ist. In diesem Fall ist die Schmierölpumpe jedoch an ein teilweise externes Verrohrungssystem angeschlossen, das einen Ölfilter und einen Ölkühler umfaßt sowie mit einem internen Verrohrungssystem verbunden ist.

Neben Anbauvarianten von Schmierölpumpen existieren außerdem Einbauvarianten. Bei innerhalb eines Getriebegehäuses angeordneten Schmierölpumpen ist entsprechend bisherigen Lösungen jeweils eine Anpassung von Pumpengehäusen erforderlich, damit diese jeweils in einer Lagerbohrung innerhalb eines Getriebes montiert werden können. Eine Anpassung von Pumpengehäusen ist äußerst aufwendig. Soll eine Schmierölpumpe darüber hinaus sowohl eine Anbauvariante als auch eine Einbauvariante aufweisen, sind entsprechend bisherigen Lösungen Adaptersysteme erforderlich, die eine Vielzahl von Adapterelementen umfassen. Dies stellt einen erheblichen Kostenfaktor dar.

Der vorliegenden Erfindung liegt daher die Aufgabe zugrunde, eine Getriebebaureihe zu schaffen, die eine einfache und kostengünstige Adaptierung von Schmierstoffversorgungspumpen hinsichtlich ihrer Anbindung an und in unterschiedliche Getriebevarianten ermöglicht.

Diese Aufgabe wird erfindungsgemäß durch eine Getriebebaureihe mit den in Anspruch 1 angegebenen Merkmalen gelöst. Vorteilhafte Weiterbildungen der vorliegenden Erfindung sind in den abhängigen Ansprüchen angegeben.

Bei der erfindungsgemäßen Getriebebaureihe weist jedes Getriebe zumindest zwei miteinander kämmende Zahnräder auf, deren zugeordnete Wellen in einem die zumindest zwei Zahnräder umfassenden Getriebegehäuse gelagert sind. Außerdem weist jedes Getriebe jeweils eine durch das Getriebegehäuse tretende Antriebswelle und Abtriebswelle auf. Des weiteren ist jeweils eine Schmierstoffversorgungspumpe vorgesehen, die ein im wesentlichen zylindrisches Pumpengehäuse umfaßt. Eine Antriebswelle der Schmierstoffversorgungspumpe ist drehfest mit der An- oder Abtriebswelle des Getriebes verbunden. Vorzugsweise ist die Antriebswelle der Schmierstoffversorgungspumpe dabei mit der schneller laufenden Welle bzw. der Welle verbunden, deren Drehzahl am besten mit einer Nenndrehzahl der Schmierstoffversorgungspumpe übereinstimmt. Zwischen der Antriebswelle der Schmierstoffversorgungspumpe und der An- oder Abtriebswelle des Getriebes ist jeweils ein mit der An- oder Abtriebswelle verschraubtes oder verklebtes Kupplungselement angeordnet, dessen pumpenseitiges Ende einen Schlitz aufweist. In diesen Schlitz greift ein an ein freies Ende der Antriebswelle der Schmierstoffversorgungspumpe angeformter Kupplungszapfen formschlüssig ein.

Erfindungsgemäß weisen zumindest zwei Schmierstoffversorgungspumpen unterschiedlicher Ausführung einen einheitlich gestalteten und dimensionierten Kupplungszapfen auf. Außerdem weisen zumindest zwei Schmierstoffversorgungspumpen unterschiedlicher Ausführung an ihrer antriebswellenseitigen Gehäusestirnseite eine einheitlich gestaltete und dimensionierte mechanische Schnittstelle auf. Diese mechanische Schnittstelle umfaßt eine den Kupplungszapfen radial umgebende Zentrierschulter und einen zu dieser konzentrischen, mit Gewindebohrungen für Befestigungsschrauben versehenen Lochkreis an der antriebswellenseitigen Gehäusestirnseite der Schmierstoffversorgungspumpe.

Zumindest eine erste Getriebevariante der erfindungsgemäßen Getriebebaureihe weist eine zur An- oder Abtriebswelle konzentrische Gehäusebohrung auf, deren Durchmesser dem Außendurchmesser der Zentrierschulter an einer Schmierstoffversorgungspumpe zumindest einer ausgewählten Ausführung entspricht. Dabei ist die Schmierstoffversorgungspumpe im Bereich der Gehäusebohrung außen am Getriebegehäuse montiert. Dagegen weist zumindest eine zweite Getriebevariante der erfindungsgemäßen Getriebebaureihe eine zur An- oder Abtriebswelle konzentrische Lagersitzbohrung auf, deren Durchmesser dem Außendurchmesser des Pumpengehäuses einer Schmierstoffversorgungspumpe der zumindest einen ausgewählten Ausführung entspricht. Hierbei ist die Schmierstoffversorgungspumpe in der Lagersitzbohrung innerhalb des Getriebegehäuses montiert.

Durch die einheitliche mechanische Schnittstelle der Schmierstoffversorgungspumpe kann diese erfindungsgemäß sowohl in einer Einbauvariante als auch in einer Anbauvariante verwendet werden. Ein derartiges Baukastensystem ermöglicht eine erhebliche Kostenreduktion. Hierzu folgen Pumpengehäuse, Pumpenelemente sowie der Schmierstoffversorgungspumpe zugeordnete Kupplungselemente und Adapterelemente vorzugsweise einem Größensystem und bilden dadurch eine Baureihe. Des weiteren ermöglicht die mechanische Schnittstelle mit dem einheitlich gestalteten und dimensionierten Kupplungszapfen und dem zugehörigen geschlitzten Kupplungselement eine einfache und schnelle Montage der Schmierstoffversorgungspumpe. Bei der zumindest einen zweiten Getriebevariante kann die An- oder Abtriebswelle des Getriebes entsprechend einer vorteilhaften Weiterbildung der vorliegenden Erfindung durch die Schmierstoffversorgungspumpe abgestützt sein. Auf diese Weise kann die Schmierstoffversorgungspumpe als Stützelement für Axialkräfte verwendet werden.

Bei der zumindest einen zweiten Getriebevariante kann zwischen Lagersitzbohrung und Pumpengehäusemantel vorteilhafterweise ein Dichtungsring angeordnet sein. Zusätzlich kann am Pumpengehäusemantel ein umlaufender Zentrierbund mit einem Einstich zur Fixierung des Dichtungsrings angeformt sein. Dies ermöglicht eine besonders einfache Montage der Schmierstoffversorgungspumpe bei einer Einbauvariante der Getriebebaureihe.

Entsprechend einer vorteilhaften Ausgestaltung der vorliegenden Erfindung kann bei der zumindest einen zweiten Getriebevariante der Durchmesser der zur An- oder Abtriebswelle konzentrischen Lagersitzbohrung dem Außendurchmesser einer Adapterscheibe oder eines Adapaterrings am Pumpengehäuse einer Schmierstoffversorgungspumpe einer zweiten Ausführung entsprechen. In diesem Fall ist die Schmierstoffversorgungspumpe in der Lagersitzbohrung innerhalb des Getriebegehäuses mittels der Adapterscheibe oder des Adapterrings montiert. Hieraus resultiert eine weiter verbesserte Wiederverwendbarkeit von Maschinenelementen für unterschiedliche Getriebevarianten innerhalb einer Getriebebaureihe. In entsprechender Weise kann hierzu auch zumindest eine dritte Getriebevariante eine zur An- oder Abtriebswelle konzentrische Lagersitzbohrung aufweisen, deren Durchmesser dem Außendurchmesser einer Adapterscheibe oder eines Adapaterrings am Pumpengehäuse einer Schmierstoffversorgungspumpe der zumindest einen ausgewählten Ausführung entspricht. Hierbei ist die Schmierstoffversorgungspumpe in der Lagersitzbohrung innerhalb des Getriebegehäuses mittels der Adapterscheibe oder des Adapterrings montiert.

Vorzugsweise sind an jeder Schmierstoffversorgungspumpe 2 Druckanschlüsse und 1 Sauganschluß für eine getriebegehäuseinterne und eine getriebegehäuseexterne Pumpenanbindung vorgesehen. Dies ermöglicht eine einfache Verwendbarkeit von Schmierstoffversorgungspumpen sowohl in Einbauvariante als auch in einer Anbauvariante.

Die vorliegende Erfindung wird nachfolgend an einem Ausführungsbeispiel anhand der Zeichnung näher erläutert. Es zeigt
- Figur 1: eine Querschnittsdarstellung einer ersten Getriebevariante einer Getriebebaureihe mit einer außerhalb eines Getriebegehäuses montierten Schmierstoffversorgungspumpe,
- Figur 2: eine Querschnittsdarstellung einer zweiten Getriebevariante einer Getriebebaureihe mit einer innerhalb eines Getriebegehäuses montierten Schmierstoffversorgungspumpe,
- Figur 3: eine vereinfachte Querschnittsdarstellung einer Schmierstoffversorgungspumpe zur Verwendung sowohl für die erste Getriebevariante als auch für die zweite Getriebevariante,
- Figur 4: eine Darstellung einer ersten Stirnseite der Schmierstoffversorgungspumpe gemäß Figur 3.
- Figur 5: eine Darstellung einer zweiten Stirnseite der Schmierstoffversorgungspumpe gemäß Figur 3.

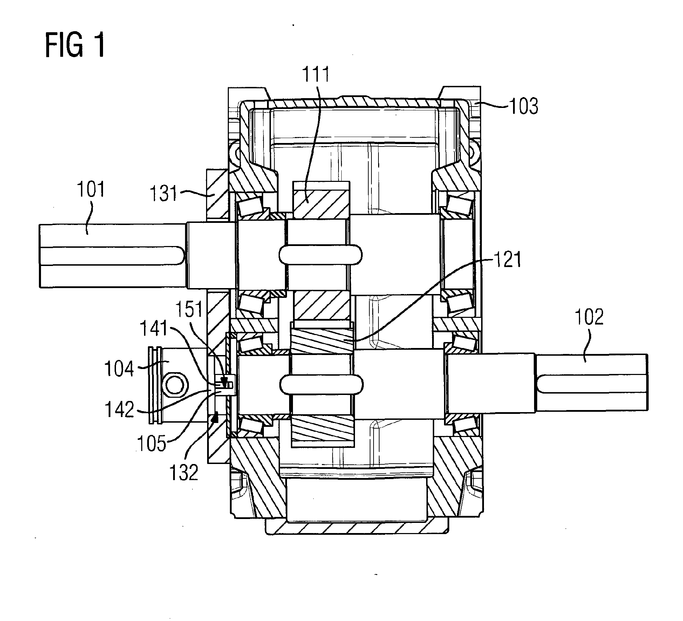

Die in Figur 1 dargestellte erste Getriebevariante der erfindungsgemäßen Getriebebaureihe, die im vorliegenden Ausführungsbeispiel zwei Getriebevarianten umfaßt, weist eine durch ein Getriebegehäuse 103 tretende Antriebswelle 101 und eine Abtriebswelle 102 auf. Mit der Antriebswelle 101 ist ein Zahnrad 111 drehfest verbunden, das mit einem drehfest mit der Abtriebswelle 102 verbundenen Zahnrad 121 kämmt. Das Getriebegehäuse 103 weist mehrere Lagersitze für der Antriebswelle 101 und der Abtriebswelle 102 zugeordnete Lager auf.

Das Getriebegehäuse 103 der ersten Getriebevariante umfaßt einen Gehäusedeckel 131 mit einer zur Abtriebswelle 102 konzentrischen Gehäusebohrung 132, deren Durchmesser dem Außendurchmesser einer Zentrierschulter 142 an einer Schmierstoffversorgungspumpe 104 entspricht. Dabei ist die Schmierstoffversorgungspumpe 104 im Bereich der Gehäusebohrung 132 außen am Getriebegehäuse montiert.

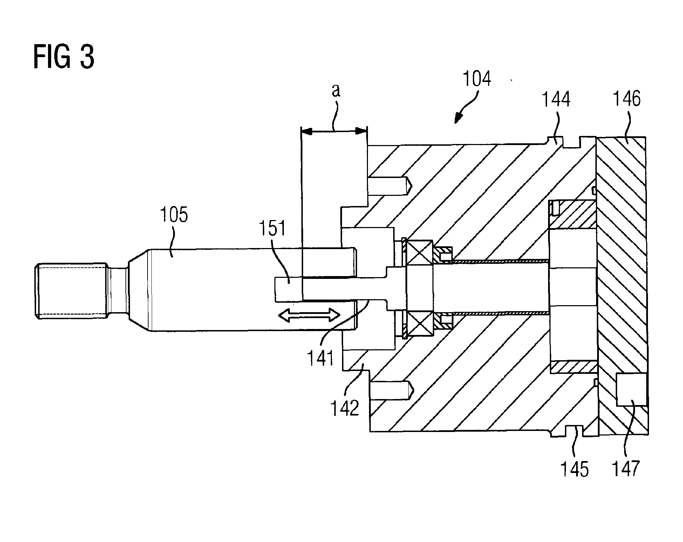

Die Schmierstoffversorgungspumpe 104 umfaßt ein im wesentlichen zylindrisches Pumpengehäuse. Eine Antriebswelle der Schmierstoffversorgungspumpe 104 ist drehfest mit der Abtriebswelle 102 des Getriebes verbunden. Zwischen der Antriebswelle der Schmierstoffversorgungspumpe 104 und der Abtriebswelle 102 des Getriebes ist ein mit der Abtriebswelle 102 verschraubtes Kupplungselement 105 angeordnet, dessen pumpenseitiges Ende einen Schlitz 151 aufweist (siehe auch Figur 3). In diesen Schlitz 151 greift ein an ein freies Ende der Antriebswelle der Schmierstoffversorgungspumpe angeformter Kupplungszapfen 141 formschlüssig ein. Bei einer schnellaufenden Antriebswelle 101 bzw. einem Untersetzungsgetriebe kann die Schmierstoffversorgungspumpe 104 in einer alternativen Ausgestaltung der vorliegenden Erfindung auch drehfest mit der Antriebswelle 101 verbunden und entsprechend innerhalb des Getriebegehäuses 103 angeordnet sein.

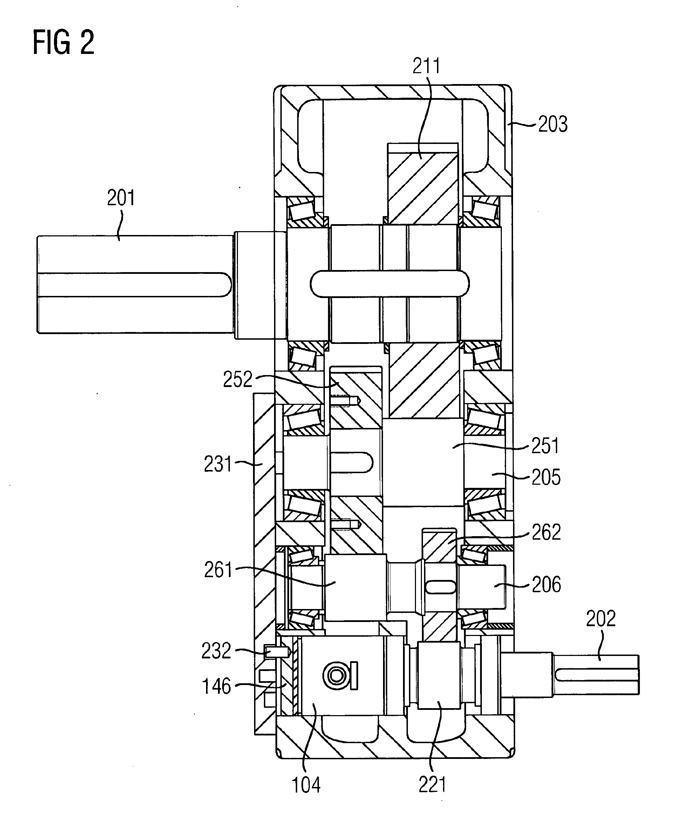

Die in Figur 2 dargestellte zweite Getriebevariante der erfindungsgemäßen Getriebebaureihe weist ebenfalls eine durch ein Getriebegehäuse 203 tretende Antriebswelle 201 und eine Abtriebswelle 202 auf. Zusätzlich sind zwei Zwischenwellen 205, 206 mit jeweils einem Ritzel 251, 261 und einem Zahnrad 252, 262 vorgesehen. Mit der Antriebswelle 201 ist ein Zahnrad 211 drehfest verbunden, das mit dem Ritzel 251 einer ersten Zwischenwelle 205 kämmt. Das Zahnrad 252 der ersten Zwischenwelle 205 steht in Eingriff mit dem Ritzel 261 der zweiten Zwischenwelle 206, dessen Zahnrad 262 mit einem Ritzel 221 kämmt, das drehfest mit der Abtriebswelle 202 verbunden ist. Analog zur ersten Getriebevariante weist das Getriebegehäuse 203 der zweiten Getriebevariante mehrere Lagersitze für der Antriebswelle 201, der Abtriebswelle 202 und den Zwischenwellen 205-206 zugeordnete Lager auf.

Das Getriebegehäuse 203 der zweiten Getriebevariante umfaßt einen Gehäusedeckel 231, der insgesamt drei zu Lagersitzbohrungen konzentrische Gehäuseöffnungen abschließt. Hierzu zählt eine Gehäuseöffnung an einer zur Abtriebswelle 202 konzentrischen Lagersitzbohrung, deren Durchmesser dem Außendurchmesser eines Pumpengehäuses einer Schmierstoffversorgungspumpe 104 entspricht, die in dieser Lagersitzbohrung innerhalb des Getriebegehäuses 203 montiert ist. Die innerhalb des Getriebegehäuses 203 montierte Schmierstoffversorgungspumpe 104 ist dabei die gleiche wie bei der ersten Getriebevariante und umfaßt also ebenfalls ein im wesentlichen zylindrisches Pumpengehäuse. Zwischen Lagersitzbohrung und Pumpengehäusemantel ist im vorliegenden Ausführungsbeispiel ein Dichtungsring angeordnet.

Eine Antriebswelle der Schmierstoffversorgungspumpe 104 ist auch bei der zweiten Getriebevariante drehfest mit der Abtriebswelle 202 des Getriebes verbunden. Zwischen der Antriebswelle der Schmierstoffversorgungspumpe 104 und der Abtriebswelle 202 des Getriebes ist ein mit der Abtriebswelle 202 verschraubtes Kupplungselement 105 angeordnet, dessen pumpenseitiges Ende einen Schlitz 151 aufweist (siehe Figur 3). Wie bei der ersten Getriebevariante greift in diesen Schlitz 151 ein an ein freies Ende der Antriebswelle der Schmierstoffversorgungspumpe angeformter Kupplungszapfen 141 formschlüssig ein. Analog zur ersten Getriebevariante kann die Schmierstoffversorgungspumpe 104 bei einer schnellaufenden Antriebswelle 201 bzw. einem Untersetzungsgetriebe auch drehfest mit der Antriebswelle 201 verbunden sein.

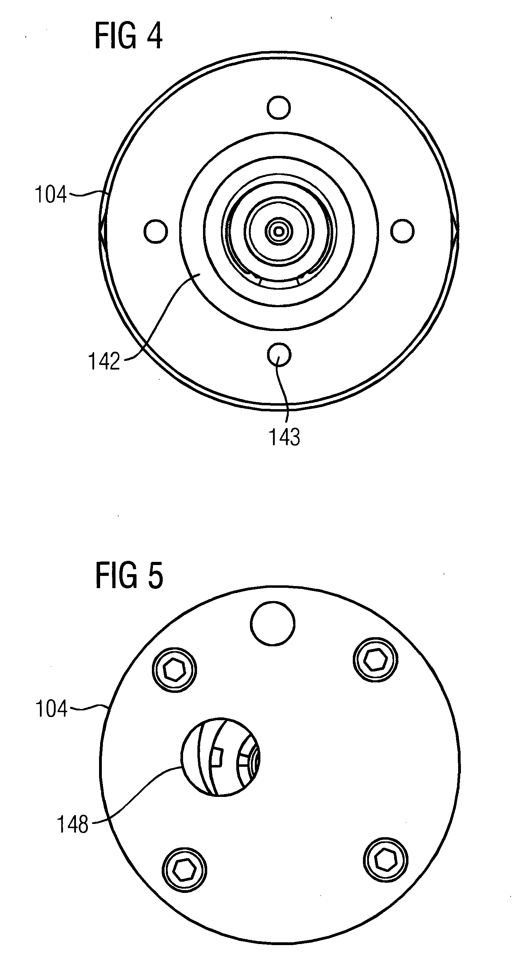

Bei der zweiten Getriebevariante ist im vorliegenden Ausführungsbeispiel an einer von der Abtriebswelle 202 des Getriebes abgewandten Stirnseite ein Pumpendeckel 146 montiert. Der Pumpendeckel 146 weist eine Bohrung 147 auf, in die zur Verbindung mit dem Gehäusedeckel 231 ein Verbindungsstift als Verdrehsicherung 232 eingesetzt ist (siehe auch Figur 3). Darüber hinaus ist auch mit dem Pumpendeckel 146 ein in Figur 5 dargestellter Druckanschluß 148 an der von der Abtriebswelle 202 des Getriebes abgewandten Stirnseite der Schmierstoffversorgungspumpe 104 offen, während ein an einer Mantelfläche der Schmierstoffversorgungspumpe 104 angeordneter Druckanschluß 149 verschlossen ist.

Auch Schmierstoffversorgungspumpen 104 unterschiedlicher Ausführung weisen einen entsprechend Figur 3 einheitlich gestalteten und dimensionierten Kupplungszapfen 141 auf. Außerdem weisen alle Schmierstoffversorgungspumpen 104 an ihrer antriebswellenseitigen ersten Gehäusestirnseite eine einheitlich gestaltete und dimensionierte mechanische Schnittstelle auf. Diese mechanische Schnittstelle umfaßt eine den Kupplungszapfen 141 radial umgebende Zentrierschulter 142 und einen zu dieser konzentrischen, mit Gewindebohrungen 143 für Befestigungsschrauben versehenen Lochkreis an der ersten Gehäusestirnseite der Schmierstoffversorgungspumpe (siehe auch Figur 4) .

Entsprechend Figur 3 ist am Pumpengehäusemantel der Schmierstoffversorgungspumpe 104 ein umlaufender Zentrierbund 144 mit einem Einstich 145 zur Fixierung des bei der zweiten Getriebevariante verwendeten Dichtungsrings angeformt. Dieser Dichtungsring kann beispielsweise zusätzlich auch zur Trennung von Saug- und Druckseite der Schmierstoffversorgungspumpe 104 dienen. Für eine getriebegehäuseinterne und eine getriebegehäuseexterne Pumpenanbindung sind vorzugsweise an jeder Schmierstoffversorgungspumpe 2 Druckanschlüsse und 1 Sauganschluß vorgesehen. Ein Druckanschluß 148 befindet sich im vorliegenden Ausführungsbeispiel an der zweiten Stirnseite der Schmierstoffversorgungspumpe 104 und wird bei der in Figur 2 dargestellten zweiten Getriebevariante zur Anbindung innerhalb des Getriebegehäuses verwendet. Über den Sauganschluß und einen je nach Getriebevariante aktivierten Druckanschluß wird zu fördernder Schmierstoff aus einem getriebegehäuseseitigen Sumpf über Leitungen oder über in das Getriebegehäuse integrierte Kanäle gefördert und verteilt.

## Patentansprüche

1. Getriebebaureihe, bei der
- jedes Getriebe zumindest zwei miteinander kämmende Zahnräder aufweist, deren zugeordnete Wellen in einem die zumindest zwei Zahnräder umfassenden Getriebegehäuse (103, 203) gelagert sind,
- jedes Getriebe jeweils eine durch das Getriebegehäuse (103, 203) tretende Antriebswelle (101, 201) und Abtriebswelle (102, 202) aufweist,
- jedes Getriebe eine Schmierstoffversorgungspumpe (104) aufweist, die ein im wesentlichen zylindrisches Pumpengehäuse umfaßt, und deren Antriebswelle drehfest mit der An- oder Abtriebswelle des Getriebes verbunden ist,
**dadurch gekennzeichnet, dass**
- jeweils zwischen der Antriebswelle der Schmierstoffversorgungspumpe (104)und der An- oder Abtriebswelle des Getriebes ein mit der An- oder Abtriebswelle verschraubtes oder verklebtes Kupplungselement (105) angeordnet ist, dessen pumpenseitiges Ende einen Schlitz (151) aufweist, in den ein an ein freies Ende der Antriebswelle der Schmierstoffversorgungspumpe (104) angeformter Kupplungszapfen (141) formschlüssig eingreift,
- zumindest zwei Schmierstoffversorgungspumpen (104) unterschiedlicher Ausführung einen einheitlich gestalteten und dimensionierten Kupplungszapfen (141) aufweisen,
- zumindest zwei Schmierstoffversorgungspumpen (104) unterschiedlicher Ausführung an ihrer antriebswellenseitigen Gehäusestirnseite eine einheitlich gestaltete und dimensionierte mechanische Schnittstelle aufweisen, die eine den Kupplungszapfen (141) radial umgebende Zentrierschulter (142) und einen zu dieser konzentrischen, mit Gewindebohrungen (143) für Befestigungsschrauben versehenen Lochkreis an der antriebswellenseitigen Gehäusestirnseite der Schmierstoffversorgungspumpe (104) umfaßt,
- zumindest eine erste Getriebevariante eine zur An- oder Abtriebswelle konzentrische Gehäusebohrung (132)aufweist, deren Durchmesser dem Außendurchmesser der Zentrierschulter (142) an einer Schmierstoffversorgungspumpe (104) zumindest einer ausgewählten Ausführung entspricht, wobei die Schmierstoffversorgungspumpe (104) im Bereich der Gehäusebohrung (132) außen am Getriebegehäuse (103) montiert ist,
- zumindest eine zweite Getriebevariante eine zur An- oder Abtriebswelle konzentrische Lagersitzbohrung aufweist, deren Durchmesser dem Außendurchmesser des Pumpengehäuses einer Schmierstoffversorgungspumpe (104) der zumindest einen ausgewählten Ausführung entspricht, wobei die Schmierstoffversorgungspumpe (104) in der Lagersitzbohrung innerhalb des Getriebegehäuses (203) montiert ist.

2. Getriebebaureihe nach Anspruch 1,
bei der bei der zumindest einen zweiten Getriebevariante zwischen Lagersitzbohrung und Pumpengehäusemantel ein Dichtungsring angeordnet ist.

3. Getriebebaureihe nach Anspruch 2,
bei der am Pumpengehäusemantel ein umlaufender Zentrierbund mit einem Einstich zur Fixierung des Dichtungsrings angeformt ist.

4. Getriebebaureihe nach einem der Ansprüche 1 bis 3,
bei der bei der zumindest einen zweiten Getriebevariante der Durchmesser der zur An- oder Abtriebswelle konzentrischen Lagersitzbohrung dem Außendurchmesser einer Adapterscheibe oder eines Adapaterrings am Pumpengehäuse einer Schmierstoffversorgungspumpe einer zweiten Ausführung entspricht, wobei die Schmierstoffversorgungspumpe in der Lagersitzbohrung innerhalb des Getriebegehäuses mittels der Adapterscheibe oder des Adapterrings montiert ist.

5. Getriebebaureihe nach einem der Ansprüche 1 bis 4,
bei der zumindest eine dritte Getriebevariante eine zur Anoder Abtriebswelle konzentrische Lagersitzbohrung aufweist, deren Durchmesser dem Außendurchmesser einer Adapterscheibe oder eines Adapaterrings am Pumpengehäuse einer Schmierstoffversorgungspumpe der zumindest einen ausgewählten Ausführung entspricht, wobei die Schmierstoffversorgungspumpe in der Lagersitzbohrung innerhalb des Getriebegehäuses mittels der Adapterscheibe oder des Adapterrings montiert ist.

6. Getriebebaureihe nach einem der Ansprüche 1 bis 5,
bei der an jeder Schmierstoffversorgungspumpe 2 Druckanschlüsse und 1 Sauganschluß für eine getriebegehäuseinterne und eine getriebegehäuseexterne Pumpenanbindung vorgesehen sind.

7. Getriebebaureihe nach einem der Ansprüche 1 bis 6,
bei der Pumpengehäuse, Pumpenelemente sowie der Schmierstoffversorgungspumpe zugeordnete Kupplungselemente und Adapterelemente einem Größensystem folgen und dadurch eine Baureihe bilden.

8. Getriebebaureihe nach einem der Ansprüche 1 bis 7,
bei der das Pumpengehäuse oder ein Pumpendeckel bei der zumindest einen zweiten Getriebevariante eine Bohrung umfaßt, in die zur Verbindung mit einem Gehäusedeckel des Getriebegehäuses ein Verbindungsstift als Verdrehsicherung eingesetzt ist.

## Claims

1. Transmission series, in which
- each transmission has at least two toothed wheels meshing with one another, the assigned shafts of which are supported in a transmission housing (103, 203) surrounding the at least two toothed wheels,
- each transmission has a drive shaft (101, 201) and take-off shaft (102, 202) passing through the transmission housing (103, 203) in each case,
- each transmission has a lubricant supply pump (104) which comprises an essentially cylindrical pump housing, and the drive shaft of which has a torque-proof connection to the drive shaft or take-off shaft of the transmission,
**characterised in that**
- a coupling element (105) screwed to or glued to the drive or take-off shaft is disposed between the drive shaft of the lubricant supply pump (104) and the drive shaft or take-off shaft of the transmission in each instance, the pump-side end of which has a slot (151) into which a coupling pin (141) formed onto a free end of the drive shaft of the lubricant supply pump (104) engages, making a positive fit,
- at least two different versions of lubricant supply pumps (104) have a uniformly designed and dimensioned coupling pin (141),
- at least two different versions of lubricant supply pumps (104) have a uniformly designed and dimensioned mechanical interface on their drive shaft-side housing end face side, which comprises a centring shoulder (142) radially surrounding the coupling pin (141) and a circle of holes concentric to this provided with threaded holes (143) for attachment screws on the drive shaft-side housing end face side of the lubricant supply pump (104),
- at least one first transmission variant has a housing hole (132) concentric to the drive shaft or take-off shaft, the diameter of which corresponds to the external diameter of the centring shoulder (142) on a lubricant supply pump (104) of at least one selected version, wherein the lubricant supply pump (104) in the area of the hole in the housing (132) is installed externally on the transmission housing (103),
- at least one second transmission variant has a bearing seat hole concentric to the drive shaft or take-off shaft, the diameter of which corresponds to the external diameter of the pump housing of a lubricant supply pump (104) of the at least one selected version, wherein the lubricant supply pump (104) is installed in the bearing seat hole within the transmission housing (203).

2. Transmission series according to claim 1,
in which a sealing ring is disposed in the at least one second transmission variant between bearing seat hole and pump housing jacket.

3. Transmission series according to claim 2,
in which a circumferential centring band with a recess for fixing the sealing ring is formed onto the pump housing jacket.

4. Transmission series according to one of claims 1 to 3,
in which, in the at least one second transmission variant, the diameter of the bearing seat hole concentric to the drive shaft or take-off shaft corresponds to the external diameter of an adapter shim or of an adapter ring on the pump housing of a second version of a lubricant supply pump, wherein the lubricant supply pump is installed in the bearing seat hole within the transmission housing by means of the adapter shim or the adapter ring.

5. Transmission series according to one of claims 1 to 4,
in which at least a third transmission variant has a bearing seat hole concentric to the drive shaft or take-off shaft, of which the diameter corresponds to the external diameter of an adapter shim or an adapter ring on the pump housing of a lubricant supply pump of the at least one selected version, wherein the lubricant supply pump is installed in the bearing seat hole within the transmission housing by means of the adapter shim or the adapter ring.

6. Transmission series according to one of claims 1 to 5,
in which 2 pressure connections and 1 induction connection are provided on each lubricant supply pump 2 to connect the pump to the inside of the transmission housing or the outside the transmission housing.

7. Transmission series according to one of claims 1 to 6,
in which the pump housing, pump elements and coupling elements and adapter elements assigned to the lubricant supply pump follow a size system and thereby form a series.

8. Transmission series according to one of claims 1 to 7,
in which the pump housing or a pump cover in the at least one second transmission variant includes a hole into which a connecting pin is inserted as an anti-torque facility for connection with a housing cover of the transmission housing.

## Revendications

1. Ligne de transmission, dans laquelle
- chaque transmission a au moins deux roues dentées engrenant l'une avec l'autre et dont les arbres associés sont montés dans un carter ( 103, 203 ) de transmission comprenant les au moins deux roues dentées,
- chaque transmission a respectivement un arbre ( 101, 201 ) menant passant dans le carter ( 103, 203 ) de transmission et un arbre ( 102, 202 ) mené,
- chaque transmission a une pompe ( 104 ) d'alimentation en lubrifiant, qui comprend un carter de pompe sensiblement cylindrique et dont l'arbre d'entraînement est solidaire en rotation de l'arbre menant ou de l'arbre mené de la transmission,
**caractérisée en ce que**
- il est monté respectivement, entre l'arbre d'entraînement de la pompe ( 104 ) d'alimentation en lubrifiant et l'arbre menant ou mené de la transmission, un élément ( 105 ) d'accouplement, qui est vissé ou qui est collé à l'arbre menant ou à l'arbre mené et dont l'extrémité du côté de la pompe a une fente ( 151 ), dans laquelle pénètre à complémentarité de forme un tourillon ( 141 ) d'accouplement formé à une extrémité libre de l'arbre d'entraînement de la pompe ( 104 ) d'alimentation en lubrifiant,
- au moins deux pompes ( 104 ) d'alimentation en lubrifiant de réalisation différente ont un tourillon ( 141 ) d'accouplement conformé et dimensionné d'une manière unitaire,
- au moins deux pompes ( 104 ) d'alimentation en lubrifiant de réalisation différente ont, du côté frontal du carter du côté de l'arbre d'entraînement, une interface mécanique conformée et dimensionnée de manière unitaire, qui comprend, du côté frontal du carter du côté de l'arbre d'entraînement de la pompe ( 104 ) d'alimentation en lubrifiant, un épaulement ( 142 ) de centrage entourant radialement le tourillon ( 141 ) d'accouplement et un cercle formant trou concentrique à celui-ci et pourvu de taraudages ( 143 ) pour des vis de fixation,
- au moins une première variante de transmission a un trou ( 132 ) de carter concentrique à l'arbre menant ou à l'arbre mené, dont le diamètre correspond au diamètre extérieur de l'épaulement ( 142 ) de centrage sur une pompe ( 104 ) d'alimentation en lubrifiant d'au moins une réalisation sélectionnée, la pompe ( 104 ) d'alimentation en lubrifiant étant montée dans la zone du trou ( 132 ) du carter à l'extérieur sur le carter ( 103 ) de la transmission,
- au moins une deuxième variante de transmission a un trou de siège de palier concentrique à l'arbre menant ou à l'arbre mené, dont le diamètre correspond au diamètre extérieur du carter d'une pompe ( 104 ) d'alimentation en lubrifiant, qui correspond au moins à une réalisation sélectionnée, la pompe ( 104 ) d'alimentation en lubrifiant étant montée dans le trou de siège du palier à l'intérieur du carter ( 203 ) de la transmission.

2. Ligne de transmission suivant la revendication 1,
dans laquelle, dans la au moins une deuxième variante de transmission, une bague d'étanchéité est montée entre le trou de siège de palier et l'enveloppe du carter de pompe.

3. Ligne de transmission suivant la revendication 2,
dans laquelle il est formé, sur l'enveloppe de carter de pompe, un collet de centrage faisant tout le tour et ayant une encoche pour l'immobilisation de la bague d'étanchéité.

4. Ligne de transmission suivant l'une des revendications 1 à 3,
dans laquelle, dans la au moins une deuxième variante de transmission, le diamètre du trou de siège de palier concentrique à l'arbre menant ou à l'arbre mené, correspond au diamètre extérieur d'une rondelle d'adaptateur ou d'une bague d'adaptateur au carter d'une pompe d'alimentation en lubrifiant d'une deuxième réalisation, la pompe d'alimentation en lubrifiant étant montée, dans le trou du siège de palier à l'intérieur du carter de la transmission, au moyen de la rondelle formant adaptateur ou de la bague formant adaptateur.

5. Ligne de transmission suivant l'une des revendications 1 à 4,
dans laquelle au moins une troisième variante de transmission à un trou de siège de palier concentrique à l'arbre menant ou à l'arbre mené, dont le diamètre correspond au diamètre extérieur d'une rondelle formant adaptateur ou d'une bague formant adaptateur d'un carter d'une pompe d'alimentation en lubrifiant de la au moins une réalisation sélectionnée, la pompe d'alimentation en lubrifiant étant montée dans le trou du siège de palier à l'intérieur du carter de la transmission au moyen de la rondelle formant adaptateur ou de la bague formant adapteur.

6. Ligne de transmission suivant l'une des revendications 1 à 5,
dans laquelle il est prévu sur chaque pompe 2 d'alimentation en lubrifiant des raccords de refoulement et un raccord d'aspiration pour un raccordement de pompe interne au carter de la transmission et un raccordement externe au carter de la transmission.

7. Ligne de transmission suivant l'une des revendications 1 à 6,
dans laquelle des carters de pompe, des éléments de pompe, ainsi que des éléments d'accouplement associés à la pompe d'alimentation en lubrifiant et des éléments formant adaptateurs, font suite à un système de grandeurs et forment ainsi une ligne.

8. Ligne de transmission suivant l'une des revendications 1 à 7,
dans laquelle le carter de pompe ou un couvercle de pompe comprend, dans la au moins une deuxième variante de transmission, un trou, dans lequel est insérée, pour la liaison à un couvercle du carter de la transmission, une broche de liaison en tant que sécurité vis-à-vis de la torsion.
